# EUROPEAN PATENT SPECIFICATION

(11) **EP 2 698 842 B1**
(45) Date of publication and mention of the grant of the patent: **29.04.2015**
(21) Application number: 13180018.7
(22) Date of filing: 12.08.2013
(51) Int. Cl.: H01M 2/12

(54) **A lead-acid battery cover with compact double-hole venting structure**
Bleisäurebatterieabdeckung mit kompakter Doppelloch-Entlüftungsstruktur
Couvercle de batterie au plomb-acide avec structure de ventilation à double orifice

(30) Priority: 14.08.2012 CN 201220399770 U
(43) Date of publication of application: 19.02.2014
(73) Proprietor: Camel Group Huazhong Branch Co., Ltd., Gucheng City, Hubei 441000 (CN)
(72) Inventor: Liu, Shizhong, 441000 Xiangyang City (CN); Wang, Tao, 441000 Xiangyang City (CN); Liu, Juan, 441000 Xiangyang City (CN); Xiao, Juntao, 441000 Xiangyang City (CN)
(74) Representative: Meyer-Dulheuer, Karl-Hermann

(56) References cited:
- US-A- 5 424 146
- US-A- 5 843 593

## Description

### Technical Field:

This utility model belongs to storage battery technology field. It relates to a vehicle battery component, esp. a kind of lead-acid battery cover with strong venting and backflow ability.

### Background Technology:

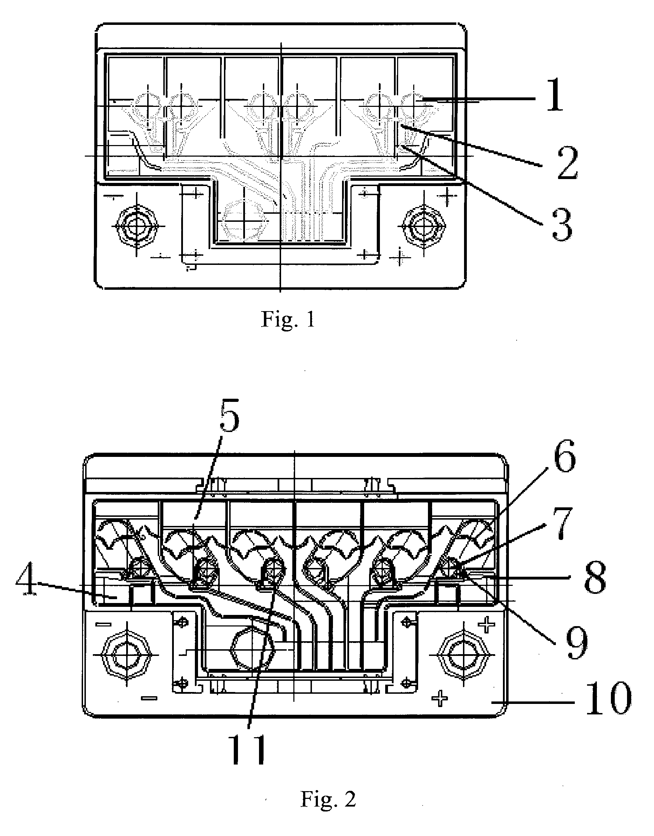

Normally a lead-acid battery consists of several cells, which are filled with sulfuric acid. In operation, the battery should be free of venting, and the acid should flow back rapidly. Thus, the battery cover should be designed with venting hole and backflow hole. Also there should be maze and acid baffle to reduce electrolyte loss. In previous designs, there's one hole to vent & backflow, or a main venting hole 1 and an assist venting hole 3, see figure 1. But there's a long path 2 between them. Both of these two designs have disadvantages - poor venting, and long flow path - causing acid spill out and risk vehicles safety.

### Contents of the Invention:

This utility model is used to overcome the defects in existing technology, and provide a lead-acid battery cover with compact double-hole venting structure.

The technical solution for the utility model is: a cover for lead-acid battery with compact double-hole venting structure, consisting of cover and venting lid which are heat sealed together. Cover, venting lid and battery container form the middle cell and fringe cells. There are venting and backflow holes, and backflow path formed by maze baffle. The feature is: all the stated middle cell and fringe cells have 2 venting and backflow holes, one is round and bigger, the other is also round but smaller; the distance between the bigger hole and smaller hole is 1~3 times of baffle thickness.

The small round venting and backflow hole in the middle cell stated in the utility model technical solution is on the central line of battery cover, while the small round venting and backflow holes in fringe cells are deviate from the central line of battery cover, on the direction away from terminals. The big round venting and backflow holes in middle and fringe cells are parallel with the central line of battery cover.

The big round venting and backflow holes stated in the utility model technical solution locate in the starting end of backflow path; small round venting and backflow holes are on the backflow path; the distance between big and small holes in the middle cell is 3 times of baffle thickness; the path between big and small holes in fringe cells is formed by a baffle notch, and the path length is one time of baffle thickness.

The diameter of the small round venting and backflow holes stated in the utility model technical solution is 2~5mmm.

This utility model has made some improvements to overcome the defects of existing battery cover - only one hole used for venting and backflow, so the effect is not ideal; and the distance between main and assist venting hole is long. In this utility model design, there's a big round venting backflow hole and a small one in the same cell. And the distance between the big and the small hole is 1~3 times of the baffle thickness. Thus a compact double-hole composite structure is formed. The small round venting and backflow hole on the central line can save space, while the big hole is main hole, which is on the horizontal line, and keeps the shortest distance with the small one. With this design, acid can flow back efficiently through shortest distance while the battery is venting. And the vented gas will not carry out acid. With this improved utility model, a battery can flow back and vent very smoothly. The feature of this utility model is acid backflow and smooth vent. This utility model is mainly used on lead-acid battery cover with strong venting and backflow ability.

### Description of Figures:

Figure 1 shows the existing lead-acid battery cover's structure.
Figure 2 shows the utility model structure.

### Mode of Execution:

See figure 2. This utility model is lead-acid battery cover with compact double-hole structure, which consists of cover10 and venting lid4. Cover 10 and venting lid4 are heat sealed together. Cover10, venting lid4 and battery container form four middle cells5 and two fringe cells. There are two venting and backflow holes and a backflow path8 formed by maze baffle in middle ce115 and fringe cells. In the two venting and backflow holes, one is round and big7, the other is round and sma119,11. The big round venting and backflow holes7 in middle5 and fringe cells are parallel with the battery cover central line, while the small holes 11 in middle cells5 are on the central line, and the small holes9 in fringe cells are deviate from the central line, and away from the terminals. The big round venting and backflow holes7 locate in the starting end of backflow path8, and the small holes9,11 locate on the backflow path. The distance between the big and small holes in middle cells5 is about 3 times of the baffle thickness, while the path between big7 and small holes9 in fringe cells is formed by a baffle notch, and the length of it is 1 time of the baffle thickness. The diameter of small holes9,11 is 2~5mm. The compact double-holes improve battery safety in charging process by venting without carrying out acid, and acid flow back does not collide with venting.

## Claims

1. A lead-acid battery cover with compact double-hole venting structure, consisting of a cover and a venting lid which are heat sealed together; wherein the cover and the venting lid corresponding to the battery container units form middle cells and fringe cells; and wherein there are venting and backflow holes, backflow path formed by maze baffle; **characterized in that**: all the stated middle and fringes cells have two venting and backflow holes, wherein one is big and round, the other is small; and the distance between the big and small holes is 1~3 times of baffle thickness, and wherein the stated small round venting and backflow holes in middle cells are on the battery cover central line; the small round venting and backflow holes in fringe cells are deviate from the central line, and away from the terminals; while the big round venting and backflow holes in both middle and fringe cells are parallel with the central line.

2. The lead-acid battery cover with compact double-hole venting structure according to Claims 1, **characterized in that** the stated big round venting and backflow holes locate in the starting end of backflow path; the small round venting and backflow holes are on the backflow path; the distance between the big and small holes in middle cells is 3 times of the baffle thickness; the path between the big and small holes in fringe cells is formed by a baffle notch, and the length of it is 1 time of the baffle thickness.

3. The lead-acid battery cover with compact double-hole venting structure according to Claims 1 or 2, **characterized in that** the connecting line of the stated big and small round venting and backflow holes is ~ ° angle from the battery cover central line.

4. The lead-acid battery cover with compact double-hole venting structure according to Claims 1 or 2, **characterized in that** the diameter of the stated small round venting and backflow holes is 2~5mm.

## Patentansprüche

1. Blei-Säure-Batterieabdeckung mit kompakter Doppellochbelüftungsstruktur, bestehend aus einer Abdeckung und einem Entlüftungsdeckel, die miteinander verschweißt sind; wobei der Deckel und der Entlüftungsdeckel passend zu den Batteriebehältereinheiten mittlere Zellen und Randzellen bilden; und wobei Entlüftungs- und Rückflusslöcher vorgesehen sind, und ein Rückflusspfad durch Labyrinth-Trennwände gebildete wird; **dadurch gekennzeichnet, dass** alle genannten mittleren Zellen und Randzellen zwei Entlüftungs- und Rückflussöffnungen aufweisen, wobei eine groß und rund ist, die andere klein ist; und der Abstand zwischen den großen und kleinen Löchern 1~3-mal der Trennwand-Dicke entspricht, und wobei die genannten kleinen runden Entlüftungs- und Rückflusslöcher in den mittleren Zellen an der Mittellinie der Batterieabdeckung angeordnet sind; die kleinen runden Entlüftungs- und Rückflusslöcher in den Randzellen von der Mittellinie abweichen, und beabstandet von den Batterieanschlüssen angeordnet sind; während die großen runden Entlüftungs- und Rückflusslöcher in den mittleren Zellen und den Randzellen parallel zur Mittellinie angeordnet sind.

2. Blei-Säure-Batterieabdeckung mit kompakter Doppellochbelüftungsstruktur nach Anspruch 1, **dadurch gekennzeichnet, dass** die genannten großen runden Entlüftungs- und Rückflusslöcher am Anfang des Rückflusspfads zu finden sind; sich die kleinen runden Entlüftungs- und Rückflusslöcher auf dem Rückflusspfad befinden; der Abstand zwischen den großen und kleinen Löchern in den mittleren Zellen 3-mal der Trennwand-Dicke entspricht; der Weg zwischen den großen und kleinen Löchern in den Randzellen durch eine Aussparung in der Trennwand gebildet wird, und deren Länge 1-mal der Trennwand-Dicke entspricht.

3. Blei-Säure-Batterieabdeckung mit kompakter Doppellochbelüftungsstruktur nach den Ansprüchen 1 oder 2, **dadurch gekennzeichnet, dass** die Verbindungslinie der genannten großen und kleinen runden Entlüftungs- und Rückflusslöcher ~ ° Winkel von der Mittellinie der Batterieabdeckung ist.

4. Blei-Säure-Batterieabdeckung mit kompakter Doppellochbelüftungsstruktur nach den Ansprüchen 1 oder 2, **dadurch gekennzeichnet, dass** der Durchmesser der genannten kleinen runden Entlüftungs- und Rückflusslöcher 2~5 mm beträgt.

## Revendications

1. Couvercle de batterie plomb-acide avec une structure de ventilation double-trous compacte, composé d'un couvercle et d'un couvercle de ventilation qui sont thermosoudés ensemble; dans lequel le couvercle et le couvercle de ventilation correspondant à des unités de conteneur de batterie forment des cellules centrales et des cellules de bord; et dans lequel il y a des trous de ventilation et de reflux, et le chemin de reflux est formé par un labyrinthe chicane; **caractérisé en ce que** toutes les cellules centrales et cellules de bord ont deux trous de ventilation et de reflux, dans lequel l'un est grand et rond, l'autre est petit; et la distance entre les petits trous et les grands trous est 1~3 fois l'épaisseur de la chicane, et dans lequel les petits trous ronds de ventilation et de reflux dans les cellules centrales sont disposés sur la ligne centrale du couvercle de la batterie; les petits trous ronds de ventilation et de reflux dans les cellules de bord s'écartent de la ligne centrale, et sont loin des bornes des batterie; tandis que les grands trous ronds de ventilation et de reflux dans les cellules centrales et dans les cellules de bord sont parallèles à la ligne centrale.

2. Couvercle de batterie plomb-acide avec une structure de ventilation double-trous compacte selon la revendication 1, **caractérisé en ce que** les grands trous ronds de ventilation et de reflux sont localisé au début du chemin de reflux; les petits trous ronds de ventilation et de reflux se trouvent sur le chemin de reflux; la distance entre les grands trous et les petits trous dans les cellules centrales est 3 fois l'épaisseur de la chicane; le chemin entre les grands trous et les petits trous dans les cellules de bord est formé par une encoche de chicane, et la longueur de celle-ci est une fois l'épaisseur de la chicane.

3. Couvercle de batterie plomb-acide avec une structure de ventilation double-trous compacte selon les revendications 1 ou 2, **caractérisé en ce que** la ligne reliant les petits trous et les grands trous ronds de ventilation et reflux est ~° angle de la ligne centrale du couvercle de la batterie.

4. Couvercle de batterie plomb-acide avec une structure de ventilation double-trous compacte selon les revendications 1 ou 2, **caractérisé en ce que** le diamètre des petits trous ronds de ventilation et de reflux est 2~5mm.
